# FASCICULE DE BREVET EUROPEEN

(11) **EP 1 787 555 B1**
(45) Date de publication et mention de la délivrance du brevet: **07.01.2009**
(21) Numéro de dépôt: 06124273.1
(22) Date de dépôt: 17.11.2006
(51) Int. Cl.: A47J 37/10, A47J 36/02

(54) **Dispositif de revêtement de la surface de cuisson d'un ustensile de cuisine**
Beschichtungsfolie für die Oberfläche eines Kochgerätes
Coating device for the surface of a cooking appliance

(30) Priorité: 21.11.2005 FR 0553524
(43) Date de publication de la demande: 23.05.2007
(73) Titulaire: Debsy International, 06200 NICE (FR)
(72) Inventeur: Symays, Bernard, 06000, Nice (FR)
(74) Mandataire: Decobert, Jean-Pascal

(56) Documents cités:
- CA-A1- 2 251 492
- US-A- 4 320 699
- US-B1- 6 182 557
- US-B1- 6 457 601

## Description

La présente invention concerne un dispositif de revêtement de la surface de cuisson d'un ustensile de cuisine.

Le terme ustensile de cuisine s'entend au sens large et comprend tout appareillage utilisé pour réaliser la cuisson d'aliments. Il s'agit notamment de poêles, de grilles ou de plaques de cuisson de four traditionnel ou à micro-ondes, de casseroles, de plaques de cuisson par elles mêmes et cette liste n'est pas limitative.

On connaît actuellement des ustensiles de cuisine, notamment des poêles, présentant un revêtement anti-adhésif à base de poly-tétra fluoro éthylène (ci-après PTFE) avec les avantages que l'on connaît à ces revêtements spécifiques. Un inconvénient de tels ustensiles est que la surface anti-adhésive se dégrade inévitablement après un certain nombre de cycles d'utilisation.

On connaît déjà des feuilles ou des toiles de cuisson, généralement constituées en diverses matières dont le PTFE, le silicone, le tissus en fibres de verre enduites sur les deux faces d'une matière anti-adhésive du type PTFE ou autre, aptes à constituer le revêtement de la surface de cuisson d'ustensiles de cuisine. Ces feuilles ont l'avantage d'être amovibles de sorte qu'elles peuvent être remplacées une fois usagées. Ces feuilles ou toiles de cuisson ont l'avantage d'être amovibles de sorte qu'elles peuvent être posées, utilisées, enlevées, lavées, séchées et remplacées une fois usagées. En outre, les deux faces anti-adhésives sont exploitables.

Les feuilles ou toiles de cuisson de ce type actuellement connues ont des formes variables, en particulier circulaires, ovales, octogonales ou rectangulaires de sorte à s'adapter à la configuration de la surface de cuisson sur laquelle on les applique.

Le document US 4.320.699 divulgue un revêtement pour surface de cuisson, selon le préambule de la revendication indépendante 1.

Les feuilles actuelles remplissent bien leur fonction de revêtement anti-adhérent de la surface de cuisson mais il existe un besoin d'améliorer la technique existante de sorte à optimiser l'utilisation de telles feuilles.

La présente invention s'inscrit dans ce cadre et concerne à cet effet un nouveau dispositif de revêtement de la surface de cuisson d'un ustensile de cuisine selon la revendication indépendante 1.

La présence de telles poignées est particulièrement avantageuse dans toutes les phases d'utilisation du dispositif. Lors de la mise en place et de l'enlèvement du dispositif de revêtement, les poignées facilitent la manipulation de l'ensemble et évitent notamment tout contact des mains de l'utilisateur avec le pourtour de l'accessoire de cuisine pouvant être à une température élevée.

Avant, en cours de cuisson, et après, les moyens de préhension ici proposés permettent, sans contact avec les parois chauffées de l'ustensile de cuisine, de manipuler le dispositif. Par exemple, l'action sur une poignée permet de retourner les aliments pour une cuisson sur les deux faces. Ces opérations peuvent être répétées alternativement par le biais des poignées.

Cet exemple illustre que la présente invention évite le recours systématique à des accessoires tels cuillères ou spatules pour manipuler les aliments. On garantit ainsi une cuisson parfaite sans ustensile additionnel tout en évitant de dégrader les aliments lors du retournement en cours de cuisson.

Par exemple, l'action de préhension sur une poignée permet de maintenir la feuille de cuisson en place et de verser un excédent de jus de cuisson, ou encore, l'action de préhension d'une poignée et le basculement de celle-ci vers l'autre permet de retourner l'aliment afin de le cuire uniformément sur ses deux côtés.

On accroît également la longévité des feuilles qui ne sont plus abîmées par des objets pointus tels fourchettes, pinces, spatules, etc.

Suivant une autre possibilité, le dispositif peut assurer la fonction de couvercle pour couvrir le volume intérieur d'un ustensile de cuisine.

Les poignées facilitent aussi la préhension et permettent la suspension du dispositif, par exemple à un crochet.

D'autres buts et avantages apparaîtront au cours de la description qui suit d'un mode de réalisation de l'invention préféré mais non limitatif.

Les dessins ci-joints sont donnés à titre d'exemples et ne sont pas limitatifs de l'invention. Ils représentent seulement un mode de réalisation de l'invention et permettront de la comprendre aisément.
La figure 1 est une vue de dessus du dispositif de l'invention.
La figure 2 est une vue en coupe suivant les lignes AA de la figure 1.
La figure 3 montre un exemple de coopération entre un accessoire de cuisine tel une poêle et le présent dispositif.

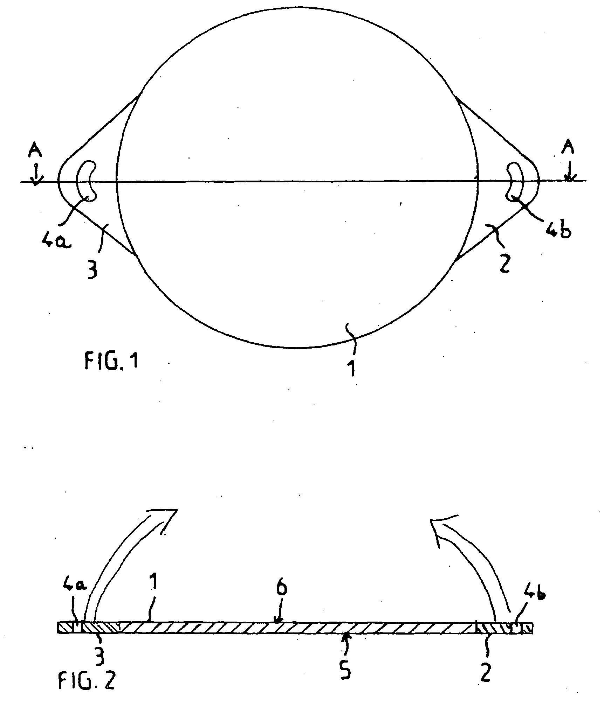

On a représenté à la figure 1 le cas d'un dispositif comportant une feuille en matériau anti-adhésif de forme sensiblement circulaire et réalisée à partir d'un tissus de fibres de verre enduit sur ses deux faces de PTFE ou de silicone. A titre d'exemple, et purement indicativement, le diamètre de la feuille peut être compris entre 15 et 45 cm. Le terme feuille s'entend au sens large d'une portion de faible épaisseur et inclut la notion de toile.

On peut également réaliser une feuille d'autre forme, notamment de forme rectangulaire. La forme de la feuille est essentiellement adaptée à la forme de la surface de cuisson sur laquelle elle va s'appliquer.

Dans le cas de la figure 1, la feuille 1 coopère avec des poignées 2, 3 ici illustrées au nombre de deux et formées dans le prolongement de la feuille 1. Cela s'entend du fait que les poignées 2, 3 sont réalisées d'un seul tenant dans la matière même de la feuille 1 ou sont rapportées au niveau de la bordure de la feuille 1. Les poignées 2, 3 peuvent être situées, suivant un mode avantageux, dans le même plan que la feuille 1 ou présenter une légère inclinaison vers la surface supérieure 6 de la feuille 1.

Cela étant, si on souhaite réaliser un dispositif à double face anti-adhésive, il est préférable que les poignées 2, 3 soient situées dans le plan de la feuille 1.

Le nombre de poignées et leur disposition ne sont pas limités selon l'invention. Le cas illustré est donc parfaitement indicatif et on aurait pu constituer notamment un dispositif avec quatre poignées réparties de façon équidistante ou non sur le pourtour de la feuille 1.

Le dispositif à deux poignées 2, 3 illustré en figure 1 a l'avantage d'avoir une configuration symétrique des poignées relativement à la feuille de sorte à ce que l'on puisse basculer une poignée vers l'autre en cours d'utilisation pour produire aisément le retournement des aliments par repli de la feuille sur elle-même. Le mouvement de rapprochement des poignées est illustré par les flèches en figure 2.

Les figures 1 et 2 montrent également une caractéristique de l'invention selon laquelle chaque poignée 2, 3 comporte un trou oblong 4a, 4b améliorant les capacités de manipulation de l'ensemble en constituant un élément de coopération avec les doigts de l'utilisateur.

Selon l'invention, les trous oblongs 4a, 4b sont incurvés de sorte à ce que leur partie concave soit orientée vers la feuille 1 et ce pour permettre l'application du pouce à ce niveau et augmenter la rigidité.

On peut également constituer un relief anti-dérapant au niveau des poignées 4a, 4b.

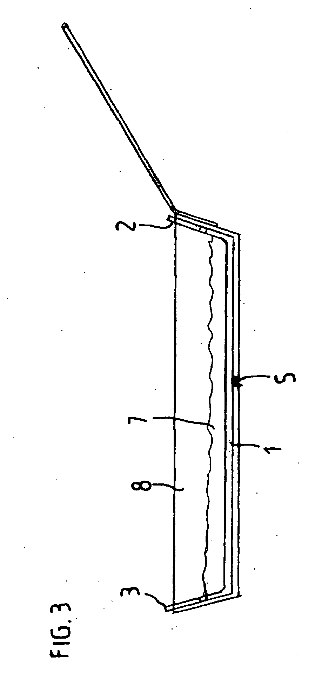

La figure 3 montre la coopération du dispositif de l'invention avec un ustensile de cuisine 8 ici du type poêle.

Sur cette figure, la face inférieure 5 de la feuille 1 est appliquée sur la surface de cuisson de l'ustensile 8. Dans le cas illustré, les dimensions de la feuille 1 sont légèrement supérieures à celles de la surface de cuisson de sorte que la feuille 1 remonte légèrement sur les bords de l'ustensile 8 constituant ainsi un rebord référencé 7.

On visualise également les poignées 2, 3 faisant plus largement saillie au-delà de la surface de cuisson de sorte à être facilement manipulées par un utilisateur.

L'exemple ainsi décrit n'est bien entendu pas limitatif de l'invention, notamment sur les choix de dimension, de forme et de matériau proposés.

Avantageusement, l'ensemble du dispositif est d'une seule pièce d'une même matière. Cependant, les poignées peuvent aussi être rapportées par tous moyens.

Toujours à titre préféré, les surfaces de la feuille 1 ont un ou des motifs en relief (tel un gaufrage).

### REFERENCES

1. Feuille
2. Poignée
3. Poignée
4a, 4b. Trou oblong
5. Face inférieure
6. Face supérieure
7. Rebord
8. Ustensile de cuisine

## Revendications

1. Dispositif de revêtement de la surface de cuisson d'un ustensile de cuisine (8), comportant une feuille (1) en matériau anti-adhérent apte à s'appliquer sur la surface de cuisson, **caractérisé par le fait**
**qu'**il comporte au moins deux poignées (2, 3) solidaires de la périphérie de la feuille (1) permettant la manipulation du dispositif, et que les poignées (2, 3) comportent un pan doté d'un trou oblong (4a, 4b) et incurvé avec une concavité orientée vers la feuille (1).

2. Dispositif selon la revendication 1 dans lequel deux poignées (2, 3) sont disposées symétriquement de part et d'autre de la feuille (1).

3. Dispositif selon la revendication 1 ou la revendication 2 dans lequel les poignées (2, 3) comportent un pan doté d'un relief anti-dérapant.

4. Dispositif selon l'une quelconque des revendication 1 à 3 dans lequel les poignées (2, 3) et la feuille (1) sont formées d'une seule pièce.

## Claims

1. Coating device for cooking surface of a cooking utensil (8), comprising a sheet (1) of anti-adherent material that can be applied to the cooking surface, **characterised in that**
it has at least two handles (2, 3) joined to the periphery of sheet (1) so that the coating system can be handled, one part of which handles (2, 3) has an oblong hole (4a, 4b) forming an inward curve towards sheet (1).

2. Device according to claim 1 in which two handles (2, 3) are arranged symmetrically on either side of sheet (1).

3. Device according to claim 1 or claim 2 in which handles (2, 3) have one part with a non-slip relief.

4. Device according to any of claims 1 to 3 in which handles (2, 3) and sheet (1) form a single piece.

## Patentansprüche

1. Vorrichtung zur Verkleidung der Garfläche eines Kochgeschirrs (8) bestehend aus einer Folie (1) eines Antihaftstoffs, die sich an die Garfläche anlegen lässt, **gekennzeichnet dadurch,**
**dass** sie mindestens zwei Griffe (2, 3) besitzt, die mit dem Umfang der Folie (1) verbunden sind und die Handhabung der Vorrichtung ermöglichen, dass die Griffe (2, 3) eine mit einem Langloch (4a, 4b) versehenen Ansatz besitzen und gewölbt sind, wobei die konkave Seite zur Folie (1) hin gerichtet ist.

2. Vorrichtung gemäß Anspruch 1, bei welcher zwei Griffe (2, 3) symmetrisch auf jeder Seite der Folie (1) angeordnet sind.

3. Vorrichtung gemäß Anspruch 1 oder Anspruch 2, bei welcher die Griffe (2, 3) einen Ansatz besitzen, der mit einem Gleitschutzrelief versehen ist.

4. Vorrichtung gemäß einem der Ansprüche 1 bis 3, bei der die Griffe (2, 3) und die Folie (1) aus einem einzigen Teil bestehen.
